(19)

Europäisches
Patentamt
European
Patent Office
Office européen
des brevets

(11) **EP 1 887 643 A1**

(12) **EUROPEAN PATENT APPLICATION**

(43) Date of publication:
**13.02.2008 Bulletin 2008/07**

(51) Int Cl.:
**H01M 8/02** (2006.01)

(21) Application number: **07015512.2**

(22) Date of filing: **07.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **09.08.2006 JP 2006216521**
**29.05.2007 JP 2007142070**

(71) Applicant: **Daido Tokushuko Kabushiki Kaisha**
**Higashi-ku**
**Nagoya**
**Aichi (JP)**

(72) Inventors:
• **Takagi, Shinobu**
**Minami-ku**
**Nagoy-shi**
**Aichi 457-8545 (JP)**
• **Hisada, Tatsuo**
**Minami-ku**
**Nagoy-shi**
**Aichi 457-8545 (JP)**
• **Huto, Masayoshi**
**Minami-ku**
**Nagoy-shi**
**Aichi 457-8545 (JP)**

(74) Representative: **Schorr, Frank Jürgen**
**Diehl & Partner,**
**Augustenstrasse 46**
**80333 München (DE)**

(54) **Metallic bipolar plate for fuel cells, and fuel cell comprising the same**

(57)    A metallic bipolar plate (10) for fuel cells is disclosed, including: a plate-like metallic substrate (12) containing a metal capable of being passivated; and a noble-metal layer (14) disposed partially on both surfaces of the metallic substrate (12) to coat the metallic substrate, the metallic bipolar plate (10) having a concave-convex portion (16) formed at least in a region facing an electrode of a membrane electrode assembly, in which both surfaces of the metallic bipolar plate (10) respectively have a contact surface which contacts with the electrode and a non-contact surface which does not contact with the electrode, and in which both surfaces of the metallic bipolar plate (10) respectively have a coating area ratio of the noble-metal layer (14) to the contact surface within a range from 20% to 100%, and a coating area ratio of the noble-metal layer (14) to the non-contact surface within a range of from 5% or more but less than 100%.

Fig. 1

## EP 1 887 643 A1

**Description**

**FIELD OF THE INVENTION**

The present invention relates to a metallic bipolar plate for fuel cells, and a fuel cell containing the same.

**BACKGROUND OF THE INVENTION**

As fuel cells, known are polymer electrolyte fuel cell (PEFC), phosphoric acid fuel cell (PAFC), molten carbonate fuel cell (MCFC), solid oxide fuel cell (SOFC), etc.

In general, these fuel cells are provided in the form of a stack for electric power generation, constructed by alternately stacking, via a bipolar plate therebetween, a plurality of membrane electrode assemblies each containing a fuel electrode, an electrolyte, and an air electrode laminated in this order.

In general, the bipolar plate has a concave-convex portion in the region facing the electrode (fuel electrode or air electrode) of a membrane electrode assembly. Of these concave-convex portion, the convex portion is in contact with the electrode surface, but the concave portion is not in contact with the electrode and used as a flow channel for reaction gas (fuel gas or oxidant gas).

In power generation, the bipolar plate of this type is exposed to a corrosive environment, and is therefore required to be resistant to corrosion. In particular, when the bipolar plate is applied in PEFC in which a polymer electrolyte having a strong acid group such as a sulfonic acid group is used as the electrolyte, it is exposed to a strong acid atmosphere and is therefore required to have high resistance to corrosion. In addition, the bipolar plate is also required to have low contact resistance, since the generated electric power must be taken out of the cell.

Recently, various metallic bipolar plates have been proposed. For example, JP-A-2002-260681 discloses a metallic bipolar plate for PEFC, which is constructed by coating the entire surface of a metal plate of an Fe-based alloy or the like with a noble-metal layer of gold or the like, followed by compressing them with a reduction ratio of 5% or more to thereby make them into a clad, and then forming passages for passing the gas.

Furthermore, for example, JP-A-10-228914 discloses a metallic bipolar plate for PEFC, which is constructed by pressing a stainless steel sheet to thereby form a swelling constitution of a large number of projections and recesses in its inner peripheral part, and then forming a gold-plating layer having a thickness of from 0.01 to 0.02 $\mu$m on the top faces of the projection tips of the swelling constitution.

In JP-A-10-228914, after the pressing, the top faces of the projection tips of the swelling constitution are partially plated, thereby forming the gold-plating layer thereon.

However, conventional metallic bipolar plates for fuel cells have the following problems.

Specifically, in the metallic bipolar plate described in JP-A-2002-260681, since the surface of a metal sheet is coated with a noble-metal layer and they are compressed with a reduction ratio of 5% or more to make them into a clad, the bipolar plate has high corrosion resistance and low contact resistance.

However, in this metallic bipolar plate, since the entire surface of the metal sheet is coated with a noble-metal layer, it has a problem in that the cost is high.

Contrary to this, in the metallic bipolar plate of JP-A-10-228914, since only the top faces of the projection tips of the swelling constitution are partially plated with a gold-plating layer, it may be seemingly advantageous in terms of the cost.

However, this metallic bipolar plate requires selective plating with gold only on the concave portions after the pressing. Accordingly, this requires precision plating technology and the production thereof is difficult, and therefore the production cost thereof shall be high. Accordingly, as a whole, this bipolar plate is disadvantageous in terms of the cost.

**SUMMARY OF THE INVENTION**

Given the situation, an object of the present invention is to provide a metallic bipolar plate for fuel cells, which has high corrosion resistance and low contact resistance and is capable of being produced at low cost.

**BRIEF DESCRIPTION OF THE DRAWINGS**

Fig. 1 is a graphic view showing one example of the outward appearance of the bipolar plate of the invention.
Fig. 2 is an enlarged view partly showing the cross section of the concave-convex portion of the bipolar plate of the invention (in which a noble-metal layer is omitted).
Fig. 3 is an enlarged view partly showing the cross section of another concave-convex portion applicable to the bipolar plate of the invention (in which the noble-metal layer is omitted).

Fig. 4 is an enlarged view partly showing the cross section of anther concave-convex portion applicable to the bipolar plate of the invention (in which the noble-metal layer is omitted).

Fig. 5 is a plan view graphically showing one example of a stripe pattern of various coating patterns with a noble-metal layer to be previously formed on the front side and the back side of a plate-like metallic substrate before forming thereon a concave-convex portion.

Fig. 6 is a plan view graphically showing one example of an oblique stripe pattern of various coating patterns with a noble-metal layer to be previously formed on the front side and the back side of a plate-like metallic substrate before forming thereon a concave-convex portion.

Fig. 7 is a plan view graphically showing one example of a radial stripe pattern of various coating patterns with a noble-metal layer to be previously formed on the front side and the back side of a plate-like metallic substrate before forming thereon a concave-convex portion.

Fig. 8 is a plan view graphically showing one example of a pattern of polygons aligned vertically and horizontally, as spaced from each other, of various coating patterns with a noble-metal layer to be previously formed on the front side and the back side of a plate-like metallic substrate before forming thereon a concave-convex portion.

Fig. 9 is a plan view graphically showing one example of a pattern of polygons aligned as spaced from each other, in which the polygons and/or circles are aligned as shifted alternately, of various coating patterns with a noble-metal layer to be previously formed on the front side and the back side of a plate-like metallic substrate before forming thereon a concave-convex portion.

Fig. 10 is a plan view graphically showing one example of a houndstooth check pattern of various coating patterns with a noble-metal layer to be previously formed on the front side and the back side of a plate-like metallic substrate before forming thereon a concave-convex portion.

Fig. 11 is a plan view graphically showing one example of a pattern of alternately aligned triangles and/or trapezoids of various coating patterns with a noble-metal layer to be previously formed on the front side and the back side of a plate-like metallic substrate before forming thereon a concave-convex portion.

Description of Reference Numerals and Signs

| 10 | Metallic bipolar plate for Fuel Cell |
| 12 | Metallic substrate |
| 14 | Noble-metal layer |
| 16a | Convex portion (front side) |
| 16b | Concave portion (front side) |
| 16c | Concave portion (back side) |
| 16d | Convex portion (back side) |
| 18a and 18d | Flat Surface |
| 19b and 19c | Bottom Surface |
| 20b and 20c | Side |

## DETAILED DESCRIPTION OF THE INVENTION

Namely, the present invention relates to the following (1) to (11).

(1) A metallic bipolar plate for fuel cells, comprising:

a plate-like metallic substrate comprising a metal capable of being passivated; and
a noble-metal layer disposed partially on both surfaces of the metallic substrate to coat the metallic substrate, said metallic bipolar plate having a concave-convex portion formed at least in a region facing an electrode of a membrane electrode assembly,

wherein both surfaces of the metallic bipolar plate respectively have a contact surface which contacts with the electrode and a non-contact surface which does not contact with the electrode, and
wherein said both surfaces of the metallic bipolar plate respectively have a coating area ratio of the noble-metal layer to the contact surface within a range of from 20% to 100%, and a coating area ratio of the noble-metal layer to the non-contact surface within a range of from 5% or more but less than 100%.
(2) A metallic bipolar plate for fuel cells, comprising:

a plate-like metallic substrate comprising a metal capable of being passivated; and
a noble-metal layer disposed partially on both surfaces of the metallic substrate to coat the metallic substrate, said metallic bipolar plate having a concave-convex portion formed at least in a region facing an electrode of a membrane electrode assembly,

wherein one surface of the metallic bipolar plate has a contact surface which contacts with the electrode and a non-contact surface which does not contact with the electrode,
wherein said one surface of the metallic bipolar plate has a coating area ratio of the noble-metal layer to the contact surface within a range of from 20% to 100%, and a coating area ratio of the noble-metal layer to the non-contact surface within a range of from 5% or more but less than 100%, and
wherein another surface of the metallic bipolar plate has a coating area ratio of the noble-metal layer to the entire surface of said concave-convex portion within a range of from 5% or more but less than 100%.
(3) The metallic bipolar plate according to (1) or (2), wherein the metallic substrate and the noble-metal layer are subjected to compression.
(4) The metallic bipolar plate according to any one of (1) to (3), which has a peeling area ratio of the noble-metal layer in a peeling test after a corrosion test of 50% or less.
(5) The metallic bipolar plate according to any one of (1) to (4), wherein the noble-metal layer has a thickness within a range of from 1 nm to 100 nm.
(6) The metallic bipolar plate any one of (1) to (5), wherein at least a part of said noble-metal layer coating said convex portion has a thickness larger than a thickness of said noble-metal layer coating said concave portion.
(7) The metallic bipolar plate according to (6), wherein the part of said noble-metal layer coating said convex portion, which has a thickness larger than the thickness of said noble-metal layer coating said concave portion, has an area ratio with respect to the coating area ratio of the noble-metal layer to said contact surface of 5% or more.
(8) The metallic bipolar plate according to any one of (1) to (7), wherein said metal constituting the metallic substrate is at least one member selected from the group consisting of Fe, Ni, Ti and an alloy thereof.
(9) The metallic bipolar plate according to any one of (1) to (8), wherein said noble metal constituting the noble-metal layer is at least one member selected from the group consisting of Au, Ag, Pt, Pd, Rh, Ru and an alloy thereof.
(10) The metallic bipolar plate according to any one of (1) to (9), wherein a passive film is formed on an exposed part of the metallic substrate according to at least one anticorrosion treatment selected from an acid treatment, a peroxide treatment and an ozone treatment.
(11) A fuel cell comprising the metallic bipolar plate according to any one of (1) to (10).

The metallic bipolar plate for fuel cells according to the invention includes a plate-like metallic substrate composed of a metal capable of being passivated and a noble-metal layer disposed partially on both surfaces of the metallic substrate to coat the metallic substrate, and the coating area ratio of the noble-metal layer on each surface of the bipolar plate is defined to fall within a specific range.
In the metallic bipolar plate for fuel cells, a local cell is formed between the metallic substrate and the noble-metal layer. As a result, the potential of the metallic substrate is shifted from an active state region to a passivated state region, even in the case that, in general, the potential of the metallic substrate alone may be in an active state region to cause corrosion. Accordingly, even though the metallic substrate is partly exposed to a corrosive environment, high corrosion resistance can be exerted. In addition, due to the presence of the noble-metal layer, the bipolar plate may ensure high conductivity and the contact resistance to a membrane electrode assembly may be lowered.
In addition, as compared with a case where both surfaces of the metallic substrate are entirely coated with a noble-metal layer, the amount of the expensive noble metal to be used in the bipolar plate can be reduced. Accordingly, the cost of the bipolar plate can be reduced. Further, the metallic bipolar plate for fuel cells of the invention may be produced by partly coating a plate-like metallic substrate with a noble-metal layer in advance, followed by forming a concave-convex portion. Accordingly, as compared with conventional metallic bipolar plates, the bipolar plate of the invention may be produced in a simplified manner and is therefore advantageous in terms of the production cost.
When the metallic substrate and the noble-metal layer are subjected to compression, the adhesiveness therebetween may be increased.
When the peeling area ratio of the noble-metal layer in a peeling test after a corrosion test is 50% or less, the adhesiveness between the metallic substrate and the noble-metal layer is excellent. Accordingly, the bipolar plate may readily keep high corrosion resistance and low contact resistance, and may be excellent in durability.
When the thickness of the noble-metal layer is within a range of from 1 nm to 100 nm, the bipolar plate is well balanced in terms of its corrosion resistance, conductivity and cost.

When at least a part of the noble-metal layer coating the convex portion has a thickness larger than a thickness of the noble-metal layer coating the concave portion, following advantages may be obtained. Specifically, the convex portions are to be contact sites which contact with the electrode of a membrane electrode assembly and a metallic bipolar plate to be disposed adjacently. Accordingly, the conductivity of the contact sites is preferably as high as possible. Therefore, when at least a part of the noble-metal layer coating the convex portions is designed so that a thickness thereof is larger than a thickness of the noble-metal layer coating the concave portions, it becomes easy to lower the contact resistance to other members even in the case that the thickness of the noble-metal layer is thinned as a whole. Accordingly, the cost of the bipolar plate may be further reduced while keeping high corrosion resistance and low contact resistance.

In this case, when the part having a larger thickness is, in terms of the area ratio thereof, 5% or more of the coating area ratio of the noble-metal layer to the contact surface, the above-mentioned advantage may be achieved easier.

In addition, in the case that a passive film is formed on the exposed part of the metallic substrate through an anticorrosion treatment, corrosion resistance may be further improved.

The fuel cell of the invention employs the above-mentioned metallic bipolar plate, and is therefore free from a problem of electric resistance increase owing to the corrosion of the bipolar plate and from a problem of electrolyte degradation owing to released ions. Accordingly, the fuel cell may have good cell properties. In addition, as compared with conventional cases, the cost of the fuel cell of the invention may be reduced.

The metallic bipolar plate for fuel cells, and the fuel cell according to the invention are described in detail hereinunder. The metallic bipolar plate for fuel cells of the invention may be referred to as "the present bipolar plate"; and the fuel cell of the invention may be referred to as "the present fuel cell".

In the present specification, "concave portion" indicates a portion capable of forming a channel through which a gas flows. Further, "convex portion" indicates a portion capable of forming a rib where a metallic bipolar plate and a membrane electrode assembly (MEA) or a pair of metallic bipolar plates contact with each other. "Concave-convex portion" used herein includes both the concave portion and the convex portion as defined above.

1. Bipolar plate:

The present bipolar plate is made of metal. Accordingly, it may be applicable to any and every type of fuel cells capable of being driven at a temperature at which metal can be used. Concretely, the types of the fuel cells to which the present bipolar plate is applicable include, for example, PEFC, PAFC, MCFC and SOFC.

In particular, the present bipolar plate can be preferably applied to PEFC. In PEFC, the electrolyte contains a strong acid group, and the bipolar plate therein may be often exposed to a severe corrosive environment, and is therefore required to have high corrosion resistance.

The fuel cell basically has a membrane electrode assembly in which electrodes are bonded to both surfaces of the electrolyte. For example, in PEFC, the membrane electrode assembly is generally provided with an electrode including a polymer electrode membrane, a catalyst layer and a gas diffusion layer laminated in this order, in which the catalyst layer and the gas diffusion layer are bonded to the surfaces of the polymer electrode membrane (so-called MEA).

The present bipolar plate is used, while kept in contact with the electrode of the membrane electrode assembly in a fuel cell. The wording "contact with electrode" as referred to herein includes not only a case where the present bipolar plate is directly in contact with the electrode of a membrane electrode assembly but also a case where it is indirectly in contact with the electrode via any other conductive member therebetween.

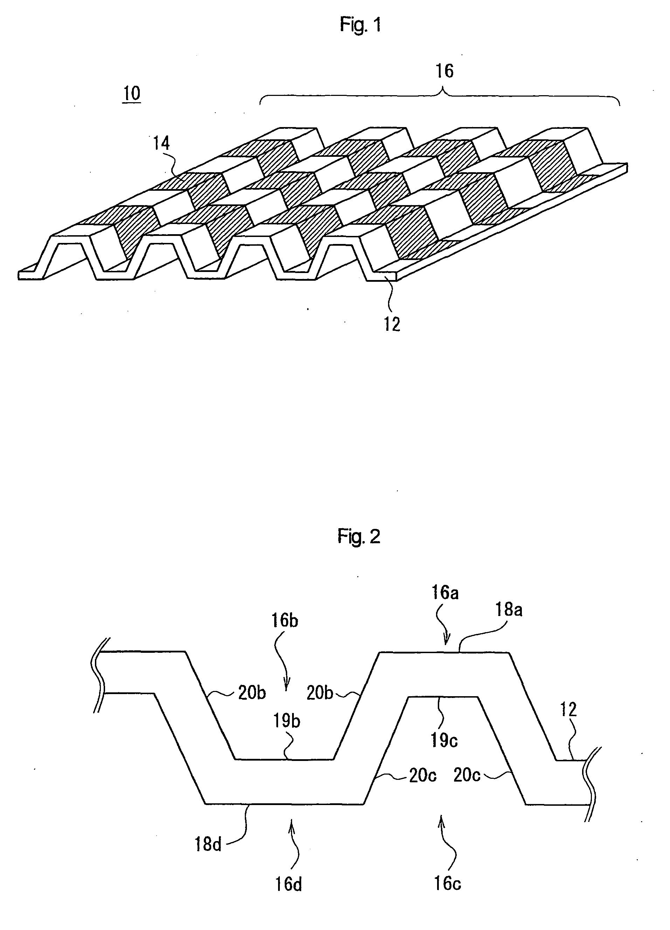

Fig. 1 is a graphic view showing one example of the outward appearance of the present bipolar plate. As shown in Fig. 1, the present bipolar plate 10 includes a plate-like metallic substrate 12, a noble-metal layer 14, and a concave-convex portion 16.

In the present bipolar plate, the noble-metal layer is provided to partially coat both surfaces of the metallic substrate and the coating area ratio of the noble-metal layer on each surface of the bipolar plate is defined to fall within a specific range. In Fig. 1, the upper surface is the front side of the bipolar plate, and the lower surface is the back side thereof, in which, though not shown, the back side is also coated with a noble-metal layer as is the front side.

In the present bipolar plate, the coating area ratio of the noble-metal layer differs depending on a case where both surfaces of the bipolar plate are kept in contact with the electrode of the membrane electrode assembly in a fuel cell in which the bipolar plate is used, and a case where one surface of the bipolar plate is kept in contact with the electrode of the membrane electrode assembly in a fuel cell in which the bipolar plate is used.

In the present bipolar plate, the concave-convex portion is formed at least in the region facing the electrode of a membrane electrode assembly. In general, the mode of the metallic bipolar plate as to whether its both surfaces or one surface are/is used may be determined depending on the configuration of the concave-convex portion.

In most metallic bipolar plates, the concave-convex portion is formed through plastic deformation of a plate-like metallic substrate, different from that in carbon bipolar plates in which the concave-convex portion is formed through mechanical cutting. It is because one of the advantages to use the metallic bipolar plate is that the concave-convex portion may be formed in a simplified manner through plastic deformation.

Accordingly, for example, as shown in Fig. 2 in an enlarged manner, the concave-convex portion 16 is in many cases so designed that the convex portion 16a on the front side is the concave portion 16c on the back side, while on the other hand, the concave portion 16b on the front side is the convex portion 16d on the back side.

In the case where the concave portion on the front side serves as a gas channel through which a reaction gas circulates, the concave portion on the back side may or may not serve as a gas channel depending on the concrete configuration of the concave-convex portion.

More concretely, as shown in Fig. 1, for example, when the concave-convex portion has a straight shape, then both the concave portion on the front side and the concave portion on the back side can serve as a gas channel. Accordingly, in the case where the present bipolar plate has the concave-convex portion of this type, both the front side and the back side of the bipolar plate may be kept in contact with the electrode of a membrane electrode assembly when it is used. (Of the present bipolar plates, those of this type may be specifically referred to as "double-face bipolar plate".)

On the contrary, though not shown, in the case where the concave-convex portion has a serpentine shape (for example, single serpentine shape or multi-serpentine shape), the concave portion on the front side may serve as a gas channel, but the concave portion on the back side cannot serve as a gas channel, since a reaction gas cannot circulate through them. Accordingly, in the case where the present bipolar plate has a concave-convex portion of this type, it may be used in such a manner that only the front side thereof is kept in contact with the electrode of a membrane electrode assembly. (Of the present bipolar plates, those of this type may be specifically referred to as "single-face bipolar plate".) When a single-face bipolar plate is used, in general, a pair of two single-face bipolar plates are combined into one with their back sides facing each other.

In the present bipolar plate, both surfaces of the metallic substrate is partially coated with a noble-metal layer, and the coating surface area of the noble-metal layer on each surface of the bipolar plate is defined to fall within a specific range.

Concretely, in the case of the double-face bipolar plate, both the front side and the back side thereof are designed so that the lowermost limit of the coating area ratio of the noble-metal layer to the contact surface to be in contact with the electrode is 20% or more, preferably 25% or more, more preferably 30% or more, most preferably 50% or more. On the other hand, the uppermost limit that may be combined with the lowermost limit is 100% or less, preferably 95% or less, more preferably 90% or less, most preferably 85% or less.

In this case, the above-mentioned "contact surface to be in contact with the electrode" is, for example, the flat surface 18a or 18d of the projection 16a or 16d in Fig. 2. The above-mentioned "coating area ratio of the noble-metal layer to the contact surface to be in contact with the electrode" may be obtained according to the following formula (1).

$$\text{Coating area ratio of the noble-metal layer to the contact surface to be in contact with the electrode, } S_C \text{ [%]}$$

$$= (\text{total area of the noble-metal layer coating the metal substrate within the contact surface})/(\text{total area of the contact surface}) \times 100 \qquad (1)$$

The lowermost limit of the coating area ratio of the noble-metal layer to the non-contact surface to be not in contact with the electrode is 5% or more, preferably 10% or more, more preferably 15% or more, most preferably 20% or more. On the other hand, the uppermost limit that may be combined with the lowermost limit is less than 100%, preferably less than 90%, more preferably 88% or less, most preferably 85% or less.

In this case, the above-mentioned "non-contact surface to be not in contact with the electrode" is, for example, the bottom face 19b or 19c, and the side face 20b or 20c of the recess 16b or 16c in Fig. 2. The above-mentioned "coating area ratio of the noble-metal layer to the non-contact surface to be not in contact with the electrode" may be obtained according to the following formula (2).

Coating area ratio of the noble-metal layer to the non-contact surface to be not in contact with the electrode, $S_{NC}$ [%]

= (total area of the noble-metal layer coating the metal substrate within the non-contact surface)/(total area of the non-contact surface) × 100      (2)

When the above $S_C$ is less than 20%, the corrosion resistance of the contact surface tends to be lowered. When the above $S_{NC}$ is less than 5%, the corrosion resistance of the non-contact surface also tends to be lowered. The reason that the lowermost limit of $S_C$ is higher than the lowermost limit of $S_{NC}$ is that the contact surface may be exposed to a more severe corrosive environment than the non-contact surface.

On the other hand, the front side of the single-face bipolar plate is kept in contact with an electrode when it is used, and therefore the same noble-metal layer coating area ratio $S_C$, $S_{NC}$ as that for the above-mentioned double-face bipolar plate shall apply to it.

Specifically, the front side is so designed that the lowermost limit of the coating area ratio of the noble-metal layer to the contact surface to be in contact with electrode, $S_C$ is 20% or more, preferably 25% or more, more preferably 30% or more, most preferably 50% or more. On the other hand, the uppermost limit that may be combined with the lowermost limit is 100% or less, preferably 95% or less, more preferably 90% or less, most preferably 85% or less.

The lowermost limit of the coating area ratio of the noble-metal layer to the non-contact surface to be not in contact with electrode, $S_{NC}$ is 5% or more, preferably 10% or more, more preferably 15% or more, most preferably 20% or more. On the other hand, the uppermost limit that may be combined with the lowermost limit is less than 100%, preferably less than 90%, more preferably 88% or less, most preferably 85% or less.

On the contrary, basically, it is enough that the back side of the single-face bipolar plate may have electric communication with the back side of another single-face bipolar plate. In addition, the corrosive environment to which the back side may be exposed is not so much severe. Accordingly, the coating area ratio of the noble-metal layer on the backside of the single-face bipolar plate may be defined in accordance with the coating area ratio of the noble-metal layer to the non-contact surface to be not in contact with electrode, $S_{NC}$ of the front side of the bipolar plate.

Concretely, in the back side of the single-face bipolar plate, the lowermost limit of the coating area ratio of the noble-metal layer to the entire surface of the concave-convex portion is 5% or more, preferably 10% or more, more preferably 15% or more, most preferably 20% or more. On the other hand, the uppermost limit that may be combined with the lowermost limit is less than 100%, preferably at most 90%, more preferably 88% or less, most preferably 85% or less.

In this case, the above-mentioned "coating area ratio of the noble-metal layer to the entire surface of the concave-convex portion" may be obtained according to the following formula (3).

Coating area ratio of the noble-metal layer to the entire surface of the concave-convex portion, $S_{BC}$ [%]

= (total area of the noble-metal layer coating the concave-convex portion)/(total surface area of the concave-convex portion) × 100      (3)

When the above-mentioned $S_{BC}$ is less than 5%, the electric resistance between the cells may increase and the power-generating performance of the fuel cell may be lowered.

In the present bipolar plate, the noble-metal layer may be provided to coat the surface and the back of the metallic substrate in any manner so long as the coating area ratio of the noble-metal layer falls within the above-mentioned specific range. Preferably; from the viewpoint of producing the present bipolar plate in a simplified manner, the noble-metal layer may be provided as patterned in stripes, for example, as shown in Fig. 1.

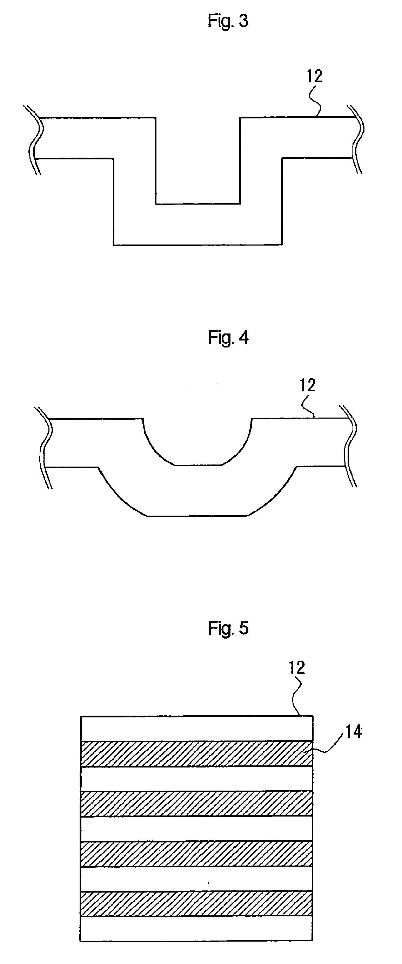

Fig. 1 and Fig. 2 show an embodiment of the present bipolar plate in which the cross section of the concave-convex portion is nearly trapezoidal. However, the shape of the concave-convex portion is not limited thereto. For example, other than this embodiment, the concave-convex portion may have a nearly square cross-section shape as in Fig. 3; or may have a nearly semi-circular cross-section shape as in Fig. 4. (In Fig. 4, the site of the portion to be in contact with an electrode is flat, but it may be semi-circular; however, the former is preferred.)

Not also specifically defined, the pitch of the concave-convex portion, the width of the convex portion, the width of the concave portion and the groove depth of the concave portion may be suitably defined.

In the present bipolar plate, the metallic substrate is composed of a metal that may be passivated. In the present invention, the metal includes not only a single metal but also an alloy.

Concretely, examples of the metal constituting the metallic substrate include Fe, Fe-based alloys, Ni, Ni-based alloys, Ti, Ti-based alloys, Al and Al-based alloys. The substrate may be composed of one or more thereof.

Of those, preferred are Fe-based alloys, Ni-based alloys, Ti and Ti-based alloys, from the viewpoint of their good corrosion resistance and strength. Of Fe-based alloys, ferrite-type stainless steel and austenite-type stainless have excellent corrosion resistance, and they are preferred from the viewpoint of their workability and cost.

More concretely, the ferrite-type stainless steel is preferably SUS430 (containing, by mass, 0.12% or less of C, 1% or less of Mn, 0.6% or less ofNi and from 16 to 18% of Cr, with the balance of substantially Fe and inevitable impurities) from the viewpoint of cost reduction.

Also from the viewpoint of cost reduction, the ferrite-type stainless steel may be a type of stainless steel (this may be hereinafter referred to as "FK1 steel") containing, by mass, 0.03% or less of C, 1% or less of Mn, 1% or less of Cu, 1% or less ofNi, and from 18 to 21% of Cr, with the balance of substantially Fe and inevitable impurities.

On the other hand, examples of the austenite-type stainless steel preferred for use herein from the viewpoint of cost reduction include SUS301 (containing, by mass, 0.15% or less of C, 2% or less of Mn, from 6 to 8% ofNi, and from 16 to 18% ofNi, with the balance of substantially Fe and inevitable impurities), SUS304 (containing, by mass, 0.08% or less of C, 2% or less of Mn, from 8 to 10.5% ofNi, and from 18 to 20% of Cr, with the balance of substantially Fe and inevitable impurities), SUS316 (containing, by mass, 0.08% or less of C, 2% or less of Mn, from 10 to 14% ofNi, from 16 to 18% of Cr, and from 2 to 3% of Mo, with the balance of substantially Fe and inevitable impurities), SUS316L (containing, by mass, 0.03% or less of C, 2% or less of Mn, from 12 to 15% ofNi, from 16 to 18% of Cr, and from 2 to 3% of Mo, with the balance of substantially Fe and inevitable impurities); and those preferred from the viewpoint of good shapability include SUSXM7 (containing, by mass, 0.08% or less of C, 2% or less of Mn, from 3 to 4% of Cu, from 8.5 to 10.5% of Ni, and from 17 to 19% of Cr, with the balance of substantially Fe and inevitable impurities).

In addition to the above, the austenite-type stainless steel preferred for use herein in view of its good corrosion resistance includes a type of stainless steel containing, by mass, 0.03% or less of C, from 5 to 7% of Mn, from 8 to 12% ofNi, from 21 to 25% of Cr, from 1 to 3% of Mo, and from 0.4 to 0.6% ofN, with the balance of substantially Fe and inevitable impurities (this may be hereinafter referred to as "AK1 steel"); and the other preferred in view of its shapability includes a type of stainless steel containing, by mass, 0.06% or less of C, from 1 to 3% of Mn, from 12 to 16% ofNi, and from 14 to 18% of Cr, with the balance of substantially Fe and inevitable impurities (this may be hereinafter referred to as "AK2 steel").

The thickness of the metallic substrate may be suitably determined in consideration of the corrosion resistance, the strength and the weight reduction of the bipolar plate. Concretely, for example, the preferred uppermost limit of the thickness of the metallic substrate may be 1.0 mm, 0.8 mm, or 0.5 mm. On the other hand, the preferred lowermost limit that may be combined with the preferred uppermost limit is, for example, 0.05 mm, 0.1 mm, or 0.2 mm.

The metallic substrate may be constituted of one or more layers. When it is constituted of plural layers, the respective layers may be composed of the same metal or different metals.

Concretely, examples of the noble metal constituting the noble-metal layer in the present bipolar plate include a single noble metal such as Au, Ag, Pt, Pd, Rh, Ru, Ir and Os; and their alloys including noble metal-noble metal alloys and noble metal-base metal alloys. One or more of these may constitute the noble-metal layer.

Of those, preferred are Au, Ag, Pt, Pd, Rh, Ru and their alloys from the viewpoint of their excellent corrosion resistance and conductivity. More preferred are Au, Au alloys, Pt and Pt alloys. One or more of these may constitute the noble-metal layer.

The thickness of the noble-metal layer may be suitably determined in consideration of the corrosion resistance, the contact resistance and the cost of the bipolar plate. Concretely, for example, the preferred uppermost limit of the thickness of the noble-metal layer is 1000 nm, 500 nm, 100 nm, 50 nm or 20 nm. On the other hand, the preferred lowermost limit that may be combined with the uppermost limit is concretely, for example, 1 nm, 5 nm, 10 nm.

The noble-metal layer may be constituted of one or more layers. When it is constituted of plural layers, the constitutive layers may be composed of the same noble metal or different noble metals.

The thickness of the noble-metal layer that coats the convex portion may be the same as that of the noble metal that coats the concave portion, or may differ from the latter. In the case where they have a different thickness, they are preferably designed so that the thickness of the noble-metal layer that coats the convex portion is larger than that of the noble-metal layer that coats the concave portion. This is because the convex portion is a contact site contacting with an electrode and a metallic bipolar plate to be disposed adjacently, and the preferred structure facilitates a reduction of contact resistance in the bipolar plate.

In this case, the portion having a thicker noble-metal layer may be a part or all of the noble-metal layer that coats the convex portion. Basically, in consideration of the necessary conductivity of the contact site, the portion of the noble-metal layer of which the thickness is to be larger may be suitably determined.

Preferably, the portion having a larger thickness is, in terms of the area ratio thereof, 5% or more of the coating area ratio of the noble-metal layer to the contact surface, more preferably 10% or more, even more preferably 20% more.

Preferably, in the present bipolar plate, the metallic substrate and the noble-metal layer are subjected to compression from the viewpoint of increasing the adhesiveness therebetween.

In this case, the compression working is preferably conducted so that the total thickness of the metallic substrate and the noble-metal layer may be reduced through the compression working to a reduction ratio of 0.1% or more, more preferably 1% or more, even more preferably 5% or more.

In the present bipolar plate, the peeling area ratio of the noble-metal layer in a peeling test after a corrosion test is preferably 50% or less, more preferably 45% or less, even more preferably 40% or less. Within the range, the adhesiveness between the metallic substrate and the noble-metal layer may be excellent, and the bipolar plate may readily keep high corrosion resistance and low contact resistance, whereby the durability thereof becomes excellent.

In the above-mentioned "corrosion test", a sample bipolar plate is kept in a boiling sulfuric acid solution at pH of 2 for 168 hours. The above-mentioned "peeling test" is based on JIS Z0237; and the above-mentioned "peeling area ratio of noble-metal layer" is the area ratio of the noble-metal layer that is peeled off by the adhesive tape used in the peeling test (180-degree peeling), and this is obtained according to the following formula (4).

$$
\begin{aligned}
&\text{Peeling area ratio of noble-metal layer [\%]} \\
&= (\text{area of the noble-metal layer which is peeled off by adhesive tape})/(\text{total area of} \\
&\text{the noble-metal layer which is peeled off by adhesive tape and the noble-metal layer} \\
&\text{which is not peeled off}) \times 100 \qquad\qquad\qquad (4)
\end{aligned}
$$

In the present bipolar plate, the exposed part of the metallic substrate may be subjected to an anticorrosion treatment, thereby forming a passive film thereon, for the purpose of further improving the corrosion resistance of the bipolar plate.

Concretely, examples of the anticorrosion treatment include an acid treatment, a peroxide treatment and an ozone treatment. One or more thereof may be used herein, either singly or in combination.

2. Method for Producing the Bipolar plate:

One example of a method for producing the present bipolar plate having the above-mentioned constitution is described below (this may be hereinafter referred to as "the present production method").

The present production method basically includes a coating step of partially coating both surfaces of the plate-like metallic substrate with a noble-metal layer, and a concave-convex portion-forming step of forming a concave-convex portion through plastic deformation of a partially noble-metal layer-coated plate-like metallic substrate. Preferably, the method further includes a compression working step of subjecting both the metallic substrate and the noble-metal layer to compression, between the coating step and the concave-convex portion-forming step. These steps are described in due order hereinunder.

In the production method, the coating step is a step of previously partially coating both surfaces of the plate-like metallic substrate with a noble-metal layer. In the coating step, the coating area ratio of the noble-metal layer to coat the front side and the back side of the metallic substrate shall vary, depending on which of a double-face bipolar plate and a single-face bipolar plate is to be produced.

In this step, the coating mode with the noble-metal layer is not specifically defined so long as the coating area ratio of the noble-metal layer may fall within the above-mentioned specific range after formation of the concave-convex portion in the subsequent concave-convex portion-forming step. Previously in consideration of the pitch of the concave-convex portion, the width of the convex portion, the width of the concave portion and the groove depth of the concave portion, the coating mode with the noble-metal layer may be suitably determined.

For the coating mode with the noble-metal layer, preferably employed is pattern coating from the viewpoint of easy regulation of the coating area ratio of the noble-metal layer. The coating mode with the noble-metal layer may be the same both on the front side and the back side of the substrate, or may differ between them.

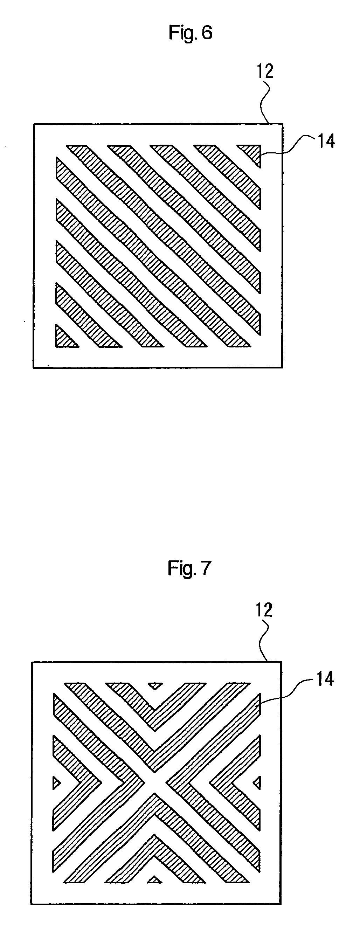

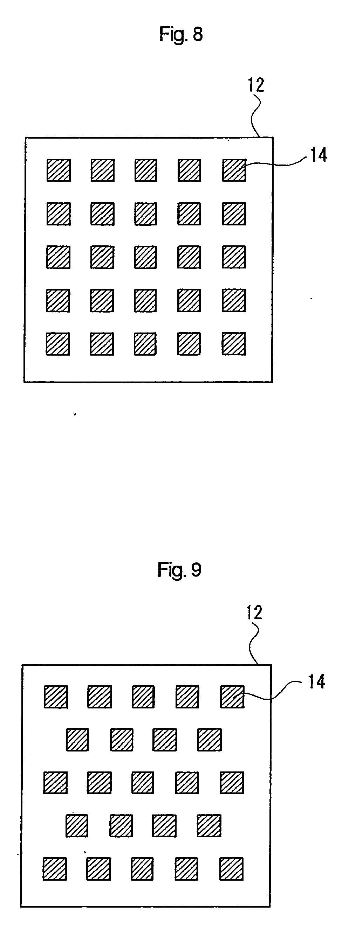

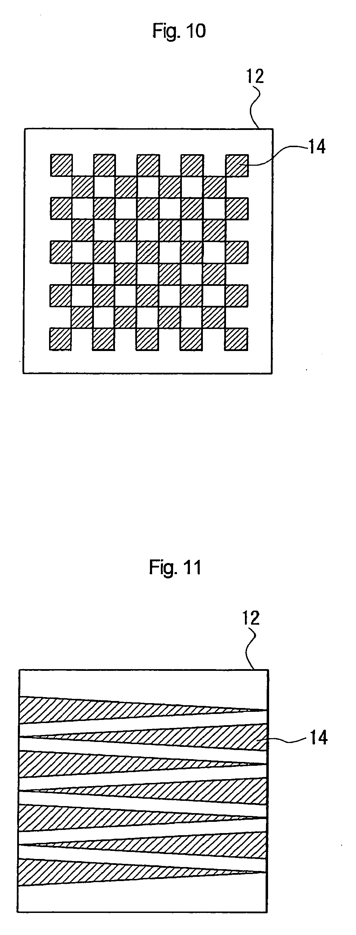

Fig. 5 to Fig. 11 graphically show embodiments of various coating modes with a noble-metal layer to be previously formed on the front side and the back side of a plate-like metallic substrate before the formation of concave-convex portion. Concretely, for example, the coating mode with a noble-metal layer includes various embodiments of a stripe pattern (Fig. 5); an oblique stripe pattern (Fig. 6); a radial stripe pattern (Fig. 7); a pattern of polygons (e.g., triangle, square, lozenge or parallelogram), circles, ovals, approximately star-shape polygons, approximately cross-shaped polygons, approximately Y-shaped polygons, approximately X-shaped polygons (hereinafter these are all referred to as a generic term "polygons") aligned vertically and horizontally, as spaced from each other (Fig. 8, in this regard, it shows a pattern of squares); a pattern of polygons aligned as shifted alternately (Fig. 9, in this regard, it shows a pattern of squares); a houndstooth check pattern (Fig. 10); and a pattern of alternately aligned triangles and/or trapezoids (Fig. 11, in this regard, it shows a pattern of triangles).

The stripes illustrated in Fig. 5 and others are linear, to which, however, the invention should not be limited but includes waved or any other indefinite forms. One or more such forms may be combined for the coating pattern.

Apart from the above, in addition, other various forms such as spiral forms, spot forms or dot forms are also employable herein.

Fig. 5 to Fig. 10 do not strictly show the width and the other parameters of the noble-metal layer in relation to the coating area ratio of the layer.

Of those, preferred for use herein are the patterns of Fig. 5, Fig. 8 and Fig. 10 from the viewpoint of easy regulation of the coating area ratio of the noble-metal layer. For example, when the stripe pattern of Fig. 5 is employed, then the present bipolar plate coated with the noble-metal layer as in Fig. 1 may be obtained.

Concretely, for the coating method with the noble-metal layer, for example, employable are any of physical vapor deposition (PVD) such as vacuum evaporation, sputtering, ion-plating, MEB or laser ablation, chemical vapor deposition (CVD) such as thermal CVD or plasma CVD, or plating such as electrolytic plating or electroless plating. One or more thereof may be employed herein either singly or in combination.

Of those, plating is preferred from the view point of cost reduction and easy patterning. Before coated with the noble-metal layer, if desired, the metallic substrate may be processed for one or more pretreatments such as removal of an oxide film formed thereon, degreasing or washing, either singly or in combination.

In the case where the thickness of the noble-metal layer coating the convex portion is made to differ from the thickness of the noble-metal layer coating the concave portion, the part of the coating layer of which the thickness is not desired to be increased is masked and the noble-metal layer-coating method mentioned above may be repeated plural times on the part of which the thickness is desired to be increased.

In the present production method, the compression working step is an optional step of compressing both the metallic substrate and the noble-metal layer. In the case where both the metallic substrate and the noble-metal layer are processed in this step, then they are cladded and the adhesiveness between them may be increased. In addition, since the noble-metal layer becomes hardly peeled off, the step is further advantageous in that it facilitates the subsequent step of processing the concave-convex portion.

Concretely, examples of the compression working include rolling and pressing. In this case, the compression working is preferably conducted so that the total thickness of both the metallic substrate and the noble-metal layer may be reduced to a reduction ratio of preferably 0.1% or less, more preferably 1% or less, even more preferably 5% or less.

In the present production method, the concave-convex portion-forming step is a step of forming a concave-convex portion through plastic deformation of a partially noble-metal layer-coated plate-like metallic substrate. The shape of the concave-convex portion is described in the above, and its description is omitted herein.

Concretely, examples of the method for forming the concave-convex portion include a method of pressing a partially noble-metal layer-coated plate-like metallic substrate, using a mold having, formed on its surface, a transfer surface that corresponds to the concave-convex portion having a desired shape; and a method of leading a partially noble-metal layer-coated plate-like metallic substrate to run between two design rolls each having, formed on their surfaces, a transfer surface that corresponds to the concave-convex portion having a desired shape.

In addition to the above-mentioned steps, the present production method may further include any other steps. For example, it may include a thermal treatment step for removing strain hardening from the compression-worked metallic substrate, after the compression-working step.

3. Fuel Cell:

The present fuel cell has the present bipolar plate. Regarding the constitution thereof, concretely, the present fuel cell includes, for example, a multi-stacked structure of membrane electrode assemblies stacked via the above-mentioned double-face bipolar plate, and a multi-stacked structure of membrane electrode assemblies stacked via a lamination of two single-face bipolar plates that are combined with their back sides facing each other.

The constitution of the membrane electrode assembly may differ depending on the type of the fuel cell mentioned above, and any conventional constitution of the assembly may be suitably employed in the present fuel cell.

Examples

The invention is described more concretely with reference to Examples given below.

Double-face bipolar plates of Examples 1R to 17R and Comparative Examples 1R and 2R, and single-face bipolar plates of Examples 1K to 14K and Comparative Examples 1K to 3K were prepared.

Specifically, the front side and the back side of a metallic substrate formed of the material and having the thickness as shown in Tables 1 and 2 were partially coated, by electroplating, with a noble-metal layer formed of the material and having the thickness as shown in Tables 1 and 2.

In this step, in consideration of the shape of the concave-convex portion to be formed in the later step, the electroplating was designed so that the noble-metal layer could have the coating area ratio as shown in Tables 1 and 2 and that, using the pattern profile of Fig. 5 or Fig. 8, an Au film could be partially formed on the concave-convex portion of the front side and the back side of the metallic substrate as in Fig. 1, with masking the site where the metallic substrate should be kept exposed.

Next, the plate-like metallic substrate thus partially coated with the noble-metal layer was pressed, thereby forming a straight concave-convex portion (pitch, 2.7 mm; convex portion width, 0.9 mm; concave portion width, 0.9 mm; slope width, 0.45 mm; concave portion depth, 0.5 mm), as in Fig. 1, and double-face bipolar plates and single-face bipolar plates each having a size of 30 mm x 30 mm were thus prepared.

In this Example, both the double-face bipolar plates and the single-face bipolar plates had the same shape of concave-convex portion for their simple test. Naturally, the coating area ratio of the noble-metal layer on the front side and the back side of the double-face bipolar plates and the single-face bipolar plates of this Example are within the defined specific range.

Next, the contact resistance of the thus-constructed double-face bipolar plates and single-face bipolar plates was measured. Briefly, the bipolar plate was sandwiched between carbon paper (manufactured by Toray Industries., Inc.) on the front side and the back side thereof, and this was disposed between a pair of Au electrodes. A current of 100 mA was applied thereto under a load of from 5 to 20 kgf/cm$^2$, and the voltage was measured in that condition. From the thus-measured voltage, the contact resistance of the bipolar plate was calculated.

Next, a commercially-available membrane electrode assembly (integrated with a gas diffusion layer) was sandwiched, on both surfaces thereof, between a pair of the above-mentioned double-face bipolar plates or a pair of the above-mentioned single-face bipolar plates, thereby constructing a PEFC cell. In this regard, the membrane electrode assembly was disposed on the front side of the double-face bipolar plates or the single-face bipolar plates. In addition, the flat surface of the convex portion of the double-face bipolar plate or the single-face bipolar plate was kept in contact with the electrode of the membrane electrode assembly, and the groove of the concave portion thereof was not in contact with the electrode of the membrane electrode assembly.

Next, the PEFC cell was tested for power generation for 1000 hours. After the power generation test, the double-face bipolar plates and the single-face bipolar plates were removed, and visually checked for the presence or absence of outward corrosion. In addition, the cell resistance during power generation was also measured.

The power generation condition in the above power generation test was as follows: The output current density was 0.5 A/cm$^2$; the fuel gas was hydrogen (flow rate, 0.5 L/min; humidification temperature, 70°C); the oxidant gas was air (flow rate, 2.0 L/min; humidification temperature, 70°C); and the cell temperature was 70°C.

Table 1 and Table 2 show the detailed constitutions of the double-face bipolar plates of Examples 1R to 17R and Comparative Examples 1R and 2R and the single-face bipolar plates of Examples 1K to 14K and Comparative Examples 1K to 3K, and their test results. In Table 1 and Table 2, the thickness of the noble-metal layer was measured according to a fluorescent X-ray method for thickness measurement (JIS H8501). In Table 1, Au-Co means alloy plating with 99 wt% Au and 1 wt% Co.

Table 1

| Double-Face Bipolar plate | Metallic substrate | | Noble-metal layer | | | | Outward Corrosion after Power Generation Test | Cell Resistance (mΩ·cm$^2$) | Contact Resistance (mΩ·cm$^2$) load, 10 kgf/cm$^2$ |
|---|---|---|---|---|---|---|---|---|---|
| | Material | Thickness (mm) | Material | Thickness (nm) | Front side and back side | | | | |
| | | | | | Coating Area Ratio (%) to Contact Surface | Coating Area Ratio (%) to Non-Contact Surface | | | |
| Example 1R | SUS316L | 0.1 | Au | 50 | 100 | 5 | no | 63 | 9.6 |
| Example 2R | SUS316L | 0.1 | Au | 50 | 100 | 10 | no | 66 | 9.5 |
| Example 3R | SUS316L | 0.1 | Au | 50 | 50 | 5 | no | 102 | 15 |
| Example 4R | SUS316L | 0.1 | Au | 50 | 50 | 10 | no | 100 | 14 |
| Example 5R | SUS316L | 0.1 | Au | 50 | 20 | 5 | no | 135 | 24 |
| Example 6R | SUS316L | 0.1 | Au | 50 | 20 | 10 | no | 134 | 22 |
| Example 7R | SUS316L | 0.1 | Au | 50 | 20 | 20 | no | 133 | 20 |
| Example 8R | SUS304 | 0.1 | Au-Co | 50 | 20 | 5 | no | 138 | 24 |
| Example 9R | Inconel 625 | 0.1 | Au-Co | 20 | 20 | 5 | no | 142 | 26 |
| Example 10R | Incoly 825 | 0.1 | Au | 10 | 20 | 5 | no | 132 | 19 |
| Example 11R | Ti | 0.1 | Pt | 10 | 20 | 5 | no | 134 | 21 |
| Example 12R | SUS430 | 0.1 | Au | 30 | 20 | 10 | no | 125 | 19 |
| Example 13R | SUS301 | 0.1 | Au | 30 | 20 | 10 | no | 130 | 20 |
| Example 14R | SUS316 | 0.1 | Au | 30 | 20 | 10 | no | 138 | 23 |
| Example 15R | AK1 | 0.1 | Au | 30 | 20 | 10 | no | 140 | 26 |
| Example 16R | AK2 | 0.1 | Au | 30 | 20 | 10 | no | 128 | 21 |
| Example 17R | SUSXM7 | 0.1 | Au | 30 | 20 | 10 | no | 129 | 22 |
| Comparative Example 1R | SUS316L | 0.1 | Au | 50 | ' 100 | 0 | yes | 70 | 9.6 |

(continued)

| Double-Face Bipolar plate | Metallic substrate | | Noble-metal layer | | | | Outward Corrosion after Power Generation Test | Cell Resistance ($m\Omega \cdot cm^2$) | Contact Resistance ($m\Omega \cdot cm^2$) load, 10 kgf/cm$^2$ |
|---|---|---|---|---|---|---|---|---|---|
| | Material | Thickness (mm) | Material | Thickness (nm) | Front side and back side | | | | |
| | | | | | Coating Area Ratio (%) to Contact Surface | Coating Area Ratio (%) to Non-Contact Surface | | | |
| Comparative Example 2R | SUS316L | 0.1 | Au | 50 | 10 | 20 | yes | 164 | 32 |
| (Note) The coating area ratio is the same on both the front side and the back side. | | | | | | | | | |

Table 2

| Single-Face Bipolar plate | Metallic substrate | | Noble-metal layer | | | | | Outward Corrosion after Power Generation Test | Cell Resistance $(m\Omega\cdot cm^2)$ | Contact Resistance $(m\Omega\cdot cm^2)$ load, 10 kgf/cm$^2$ |
|---|---|---|---|---|---|---|---|---|---|---|
| | Material | Thickness (mm) | Material | Thickness (nm) | Front side | | Back side | | | |
| | | | | | Coating Area Ratio (%) to Contact Surface | Coating Area Ratio (%) to Non-Contact Surface | Coating Area Ratio (%) to All Concave-Convex Portions | | | |
| Example 1K | SUS316L | 0.1 | Au | 50 | 100 | 5 | 5 | no | 62 | 9.5 |
| Example 2K | SUS316L | 0.1 | Au | 50 | 100 | 5 | 10 | no | 60 | 9.4 |
| Example 3K | SUS316L | 0.1 | Au | 50 | 100 | 10 | 10 | no | 66 | 9.5 |
| Example 4K | SUS316L | 0.1 | Au | 50 | 50 | 5 | 5 | no | 103 | 16 |
| Example 5K | SUS316L | 0.1 | Au | 50 | 50 | 10 | 10 | no | 101 | 15 |
| Example 6K | SUS316L | 0.1 | Au | 50 | 20 | 5 | 5 | no | 134 | 25 |
| Example 7K | SUS316L | 0.1 | Au | 50 | 20 | 10 | 10 | no | 132 | 23 |
| Example 8K | SUS316L | 0.1 | Au | 50 | 20 | 20 | 20 | no | 130 | 20 |
| Example 9K | SUS430 | 0.1 | Au | 30 | 20 | 10 | 10 | no | 125 | 21 |
| Example 10K | SUS301 | 0.1 | Au | 30 | 20 | 10 | 10 | no | 129 | 21 |
| Example 11K | SUS316 | 0.1 | Au | 30 | 20 | 10 | 10 | no | 140 | 25 |
| Example 12K | AK1 | 0.1 | Au | 30 | 20 | 10 | 10 | no | 142 | 28 |
| Example 13K | AK2 | 0.1 | Au | 30 | 20 | 10 | 10 | no | 130 | 19 |
| Example 14K | SUSXM7 | 0.1 | Au | 30 | 20 | 10 | 10 | no | 128 | 20 |
| Comparative Example 1K | SUS316L | 0.1 | Au | 50 | 100 | 0 | 0 | - | - | 54 |
| Comparative Example 2K | SUS316L | 0.1 | Au | 50 | 100 | 5 | 0 | - | - | 50 |

| Single-Face Bipolar plate | Metallic substrate | | Noble-metal layer | | | | | Outward Corrosion after Power Generation Test | Cell Resistance (mΩ·cm$^2$) | Contact Resistance (mΩ·cm$^2$) load, 10 kgf/cm$^2$ |
|---|---|---|---|---|---|---|---|---|---|---|
| | Material | Thickness (mm) | Material | Thickness (nm) | Front side | | Back side | | | |
| | | | | | Coating Area Ratio (%) to Contact Surface | Coating Area Ratio (%) to Non-Contact Surface | Coating Area Ratio (%) to All Concave-Convex Portions | | | |
| Comparative Example 3K | SUS316L | 0.1 | Au | 50 | 10 | 20 | 20 | yes | 161 | 31 |

(Note) Comparative Examples 1K and 2K could not generate electric power, as their cell resistance was extremely large.

EP 1 887 643 A1

The results in Table 1 and Table 2 shows the followings. In the double-face bipolar plate of Comparative Example 1R, the coating area ratio of the noble-metal layer to the non-contact surface to be not in contact with the electrode of MEA is 0%, and therefore, this bipolar plate does not fall within the range of the present invention. Accordingly, the non-contact surface rusted and the corrosion resistance of the bipolar plate was poor.

In the double-face bipolar plate of Comparative Example 2R, the coating area ratio of the noble-metal layer to the contact surface to be in contact with the electrode of MEA is 10%, and therefore, this bipolar plate does not fall within the range of the present invention. Accordingly, the contact surface rusted and the corrosion resistance of the bipolar plate was poor.

In the single-face bipolar plate of Comparative Example 1K, the coating area ratio of the noble-metal layer to the non-contact surface to be not in contact with the electrode of MEA is 0%, and the coating area ratio of the noble-metal layer to all the concave-convex portion on the back side is also 0%, and therefore, this bipolar plate does not fall within the range of the present invention. Accordingly, the cell resistance was extremely high and the cell could not generate power.

In the single-face bipolar plate of Comparative Example 2K, the coating area ratio of the noble-metal layer to the non-contact surface to be not in contact with the electrode of MEA is 5%, and the coating area ratio of the noble-metal layer to all the concave-convex portion on the back side is 0%, and therefore, this bipolar plate does not fall within the range of the present invention. Accordingly, the cell resistance was extremely high and the cell could not generate power.

In the single-face bipolar plate of Comparative Example 3K, the coating area ratio of the noble-metal layer to the contact surface to be in contact with the electrode of MEA is 10%, and therefore, the bipolar plate does not fall within the range of the present invention. Accordingly, the contact surface rusted and the corrosion resistance of the bipolar plate was poor. In addition, owing to contact failure to MEA, the cell resistance was high.

On the contrary, the double-face bipolar plates and the single-face bipolar plates of the present invention includes a plate-like metallic substrate composed of a metal capable of being passivated and a noble-metal layer provided thereon to partially coat the front side and the back side thereof, in which the coating area ratio of the noble-metal layer on the front side and the back side of the bipolar plate is defined to fall within the specific range. Accordingly, it is understood that, even through the metallic substrate is partly exposed to the severe corrosive environment of PEFC, it may still keep its high corrosion resistance and its contact resistance is low. In addition, since the amount of the expensive noble-metal layer to be used in the invention may be reduced, it is understood that the bipolar plate of the invention is favorable for cost reduction.

In addition, it was confirmed that PEFC employing the double-face bipolar plate or the single-face bipolar plate of Examples has a relatively low cell resistance and has good power-generation capability.

Next, double-face bipolar plates of Examples 18R to 29R were prepared in the same manner as that for the double-face bipolar plates of Examples 1R to 17R. However, as shown in Table 3, the thickness of the noble-metal layer was 20 nm or 30 nm. Also as shown in Table 3, the metallic substrate and the noble-metal layer were cladded by rolling to a reduction ratio of 0.1%, 1% or 5%.

Next, the double-face bipolar plates were tested for corrosion resistance. Briefly, the double-face bipolar plate was kept in a boiling sulfuric acid solution having a pH of 2, for 168 hours, and the metal ions released in the solution were analyzed through atomic absorption spectrometry, and their weight per liter of the solution was measured.

Immediately after the corrosion test, the double-face bipolar plate was subjected to a peeling test according to JIS Z0237. Briefly, after the corrosion test, the double-face bipolar plate was taken out of the sulfuric acid solution, then washed with ultra-pure water, and purged with acetone and dried. Then, an adhesive tape (length 50 mm x width 18 mm) was stuck to the surface of the double-face bipolar plate, and the adhesive tape was peeled off along the bipolar plate surface (180-degree peeling). With that, the area ratio of the noble-metal layer peeled with the adhesive tape was measured, and the peeling area ratio of the noble-metal layer was thus obtained.

Table 3 shows the detailed constitutions of the double-face bipolar plates of Examples 18R to 29R, and their test results.

Table 3

| Double-Face Bipolar plate | Metallic substrate | | Noble-metal layer | | | | Reduction Ratio (%) | Peeling Area Ratio (%) | Amount of Released Ion (mg/L) | | |
|---|---|---|---|---|---|---|---|---|---|---|---|
| | Material | Thickness (mm) | Material | Thickness (nm) | Front side and Back side | | | | Fe | Cr | Ni |
| | | | | | Coating Area Ratio (%) to Contact Surface | Coating Area Ratio (%) to Non-Contact Surface | | | | | |
| Example 18R | SUS316L | 0.1 | Au | 20 | 20 | 5 | 0.1 | 10 | 0.2 | <0.1 | <0.1 |
| Example 19R | SUS316L | 0.1 | Au | 20 | 20 | 10 | 0.1 | 9 | 0.2 | <0.1 | <0.1 |
| Example 20R | SUS316L | 0.1 | Au | 20 | 20 | 5 | 1 | 0 | <0.1 | <0.1 | <0.1 |
| Example 21R | SUS316L | 0.1 | Au | 20 | 20 | 10 | 1 | 0 | <0.1 | <0.1 | <0.1 |
| Example 22R | SUS316L | 0.1 | Au | 20 | 20 | 5 | 5 | 0 | <0.1 | <0.1 | <0.1 |
| Example 23R | SUS316L | 0.1 | Au | 20 | 20 | 10 | 5 | 0 | <0.1 | <0.1 | <0.1 |
| Example 24R | SUS430 | 0.1 | Au | 30 | 20 | 10 | 5 | 0 | <0.1 | <0.1 | <0.1 |
| Example 25R | SUS301 | 0.1 | Au | 30 | 20 | 10 | 5 | 0 | <0.1 | <0.1 | <0.1 |
| Example 26R | SUS316 | 0.1 | Au | 30 | 20 | 10 | 5 | 0 | <0.1 | <0.1 | <0.1 |
| Example 27R | AK1 | 0.1 | Au. | 30 | 20 | 10 | 5 | 0 | <0.1 | <0.1 | <0.1 |
| Example 28R | AK2 | 0.1 | Au | 30 | 20 | 10 | 5 | 0 | <0.1 | <0.1 | <0.1 |

(continued)

| Double-Face Bipolar plate | Metallic substrate | | Noble-metal layer | | | | Reduction Ratio (%) | Peeling Area Ratio (%) | Amount of Released Ion (mg/L) | | |
|---|---|---|---|---|---|---|---|---|---|---|---|
| | Material | Thickness (mm) | Material | Thickness (nm) | Front side and Back side | | | | Fe | Cr | Ni |
| | | | | | Coating Area Ratio (%) to Contact Surface | Coating Area Ratio (%) to Non-Contact Surface | | | | | |
| Example 29R | SUSXM7 | 0.1 | Au | 30 | 20 | 10 | 5 | 0 | <0.1 | <0.1 | <0.1 |
| (Note) The coating area ratio is the same on both the front side and the back side. | | | | | | | | | | | |

Table 3 shows the followings. In the double-face bipolar plates of Examples 18R to 29R, the metallic substrate and the noble-metal layer were cladded through compression working by rolling.

Accordingly, it is understood that the peeling area ratio of the noble-metal layer is 50% or less and the adhesiveness between the metallic substrate and the noble-metal layer is excellent. In addition, the amount of the released ions in the corrosion test is extremely small, and the bipolar plates all had high corrosion resistance. These results confirm that, when the metallic substrate and the noble-metal layer are worked in compression, then the bipolar plate may favorably keep its high corrosion resistance and its durability is excellent.

Next, double-face bipolar plates of Examples 30R to 33R and a double-face bipolar plate of Comparative Example 3R were prepared in the same manner as that for the double-face bipolar plates of Examples 1R to 17R. In these bipolar plates, the thickness of the noble-metal layer was further reduced for cost reduction.

In addition, double-face bipolar plates of Examples 34R to 35R and a double-face bipolar plate of Comparative Example 4R were prepared. These bipolar plates were constructed almost in the same manner as that for the double-face bipolar plates of Examples 1R to 17R

In these, however, the thickness of a part of the noble-metal layer that coats the convex portion is larger than the thickness of the noble-metal layer that coats the concave portion (hereinafter this is referred to as "partial layer thickness increase"). The partial layer thickness increase was attained by forming a noble-metal layer having a predetermined thickness in a predetermined site of concave-convex portion through first electroplating, then masking the area except the part where the thickness of the noble-metal layer on the convex portion is desired to increase, and repeating the electroplating plural times. These bipolar plates are for further reducing the cell resistance and the contact resistance and for further reducing the production cost.

Table 4 shows the detailed constitutions of the double-face bipolar plates of Examples 30R to 35R and double-face bipolar plates of Comparative Examples 3R and 4R, and their test results.

Table 4

| Double-Face Bipolar plate | Metallic substrate | | Noble-metal layer | | | | | | | Outward Corrosion after Power Generation Test | Cell Resistance (mΩ·cm$^2$) | Contact Resistance (mΩ·cm$^2$) load, 10 kgf/cm$^2$ |
|---|---|---|---|---|---|---|---|---|---|---|---|---|
| | Material | Thickness (mm) | Material | Thickness (nm) | Partial Layer Thickness Increase | Thickness of Thicker Part (nm) | Front side and Back side | | | | | |
| | | | | | | | Coating Area Ratio (%) to Contact Surface | Coating Area Ratio (%) to Non-Contact Surface | Area Ratio of Thicker Part (%) | | | |
| Example 30R | SUS316L | 0.1 | Au | 20 | no | - | 20 | 10 | - | no | 135 | 24 |
| Example 31R | SUS316L | 0.1 | Au | 10 | no | - | 20 | 10 | - | no | 136 | 24 |
| Example 32R | SUS316L | 0.1 | Au | 7 | no | - | 20 | 10 | - | no | 152 | 30 |
| Example 33R | SUS316L | 0.1 | Au | 5 | no | - | 20 | 10 | - | no | 189 | 46 |
| Example 34R | SUS316L | 0.1 | Au | 5 | yes | 20 | 20 | 10 | 5 | no | 149 | 28 |
| Example 35R | SUS316L | 0.1 | Au | 5 | yes | 20 | 20 | 10 | 10 | no | 136 | 24 |
| Comparative Example 3R | SUS316L | 0.1 | Au | 10 | no | - | 10 | 10 | - | yes | 182 | 44 |
| Comparative Example 4R | SUS316L | 0.1 | Au | 5 | yes | 20 | 10 | 10 | 10 | yes | 162 | 35 |

(Note 1) The coating area ratio is the same on both the front side and the back side.
(Note 2) In the samples with "yes" of partial layer thickness increase, the thickness of a part of the noble-metal layer that coats the projections is larger than the thickness of the noble-metal layer that coats the recesses.
(Note 3) The area ratio of the thicker part means a percent (%) ratio to (the coating area ratio to the contact face).

As a result, it was confirmed that, according to the partial layer thickness increase, the overall thickness of the noble-metal layer to be the base may be reduced as a whole for cost reduction, and the cell resistance and the contact resistance may be thereby reduced. For the partial layer thickness increase, noble-metal layers of different materials may be laminated, which, however, may cause local corrosion. Therefore it is desirable to laminate noble-metal layers of the same material for the thickness increase.

The metallic bipolar plate for fuel cells and the fuel cell of the invention are described hereinabove; however, the invention may be variously changed and modified not overstepping the scope and the spirit thereof.

While the present invention has been described in detail and with reference to specific embodiments thereof, it will be apparent to one skilled in the art that various changes and modifications can be made therein without departing from the spirit and scope thereof.

The present application is based on Japanese Patent Application No. 2006-216521 filed on August 9, 2006 and Japanese Patent Application No. 2007-142070 filed on May 29, 2007, and the contents thereof are incorporated herein by reference.

Furthermore, all the documents cited herein are incorporated by reference in their entireties.

Summarized, the present invention relates to a metallic bipolar plate for fuel cells, including: a plate-like metallic substrate containing a metal capable of being passivated; and a noble-metal layer disposed partially on both surfaces of the metallic substrate to coat the metallic substrate, the metallic bipolar plate having a concave-convex portion formed at least in a region facing an electrode of a membrane electrode assembly, in which both surfaces of the metallic bipolar plate respectively have a contact surface which contacts with the electrode and a non-contact surface which does not contact with the electrode, and in which both surfaces of the metallic bipolar plate respectively have a coating area ratio of the noble-metal layer to the contact surface within a range from 20% to 100%, and a coating area ratio of the noble-metal layer to the non-contact surface within a range of from 5% or more but less than 100%.

**Claims**

1. A metallic bipolar plate for fuel cells, comprising:

   a plate-like metallic substrate (12) comprising a metal capable of being passivated; and
   a noble-metal layer (14) disposed partially on both surfaces of the metallic substrate (12) to coat the metallic substrate,
   said metallic bipolar plate (10) having a concave-convex portion (16) formed at least in a region facing an electrode of a membrane electrode assembly,

   wherein both surfaces of the metallic bipolar plate (10) respectively have a contact surface (18a, 18d) which contacts with the electrode and a non-contact surface (19b, 19c, 20b, 20c) which does not contact with the electrode, and wherein said both surfaces of the metallic bipolar plate (10) respectively have a coating area ratio of the noble-metal layer to the contact surface within a range of from 20% to 100%, and a coating area ratio of the noble-metal layer to the non-contact surface within a range of from 5% or more but less than 100%.

2. A metallic bipolar plate for fuel cells, comprising:

   a plate-like metallic substrate (12) comprising a metal capable of being passivated; and
   a noble-metal layer (14) disposed partially on both surfaces of the metallic substrate (12) to coat the metallic substrate,
   said metallic bipolar plate having a concave-convex portion (16) formed at least in a region facing an electrode of a membrane electrode assembly,

   wherein one surface of the metallic bipolar plate has a contact surface which contacts with the electrode and a non-contact surface which does not contact with the electrode,
   wherein said one surface of the metallic bipolar plate has a coating ratio of the noble-metal layer to the contact surface within a range of from 20% to 100%, and a coating area ratio of the noble-metal layer to the non-contact surface within a range of from 5% or more but less than 100%, and
   wherein another surface of the metallic bipolar plate has a coating area ratio of the noble-metal layer to the entire surface of said concave-convex portion within a range of from 5% or more but less than 100%.

3. The metallic bipolar plate according to claim 1 or 2, wherein the metallic substrate (12) and the noble-metal layer (14) are subjected to compression.

4.  The metallic bipolar plate according to one of claims 1 to 3, which has a peeling area ratio of the noble-metal layer (14) in a peeling test after a corrosion test of 50% or less.

5.  The metallic bipolar plate according to one of ,claims 1 to 4, wherein the noble-metal layer (14) has a thickness within a range of from 1nm to 100nm.

6.  The metallic bipolar plate according to one of claims 1 to 5, wherein at least a part of said noble-metal layer (14) coating said convex portion. (16a, 16d) has a thickness larger than a thickness of said noble-metal layer coating said concave portion (16b, 16c).

7.  The metallic bipolar plate according to claim 6, wherein the part of said noble-metal layer (14) coating said convex portion (16a, 16d), which has a thickness larger than the thickness of said noble-metal layer coating said concave portion (16b, 16c), has an area ratio with respect to the coating area ratio of the noble-metal layer to said contact surface of 5% or more.

8.  The metallic bipolar plate according to one of claims 1 to 7, wherein said metal constituting the metallic substrate (12) is at least one member selected from the group consisting of Fe, Ni, Ti and an alloy thereof.

9.  The metallic bipolar plate according to one of claims 1 to 8, wherein said noble metal constituting the noble-metal layer (14) is at least one member selected from the group consisting of Au, Ag, Pt, Pd, Rh, Ru and an alloy thereof.

10. The metallic bipolar plate according to one of claims 1 to 9, wherein a passive film is formed on an exposed part of the metallic substrate (12) according to at least one anticorrosion treatment selected from an acid treatment, a peroxide treatment and an ozone treatment.

11. A fuel cell comprising the metallic bipolar plate according to one of claims 1 to 10.

## Fig. 1

## Fig. 2

Fig. 3

12

Fig. 4

12

Fig. 5

12

14

Fig. 6

Fig. 7

Fig. 8

Fig. 9

Fig. 10

Fig. 11

EP 1 887 643 A1

**European Patent Office**

# EUROPEAN SEARCH REPORT

EP 07 01 5512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 557 895 A (DAIDO STEEL CO LTD [JP]) 27 July 2005 (2005-07-27) | 1-3,5,8, 9,11 | INV. H01M8/02 |
| Y | * page 5, paragraph 34-37; figures 1,2B * <br> * page 10, paragraph 78 * <br> * page 11, paragraph 80 * <br> * page 13, paragraph 93-97 * <br> * page 19, paragraph 129; claim 34 * | 4,6,7,10 | |
| A | * page 6, paragraph 40-44; figures 7A,7B * | 1-11 | |
| X | WO 2005/081614 A (REINZ DICHTUNG GMBH [DE]; STROEBEL RAIMUND [DE]; QUICK LOTHAR [DE]; SC) 9 September 2005 (2005-09-09) * claims 1-3,5,7; figure 1a * | 1,2,8,9, 11 | |
| X | US 2005/003259 A1 (FORDERER HEINZ [DE] ET AL) 6 January 2005 (2005-01-06) * the whole document * | 1,2,5,9 | |
| Y | EP 1 237 215 A (DAIDO STEEL CO LTD [JP]) 4 September 2002 (2002-09-04) * page 7, paragraph 35 * <br> * page 13, paragraph 101-104 * | 4,10 | |
| A | * page 5, paragraph 18 * <br> * page 7, paragraph 36 * | 3,5,8,9 | TECHNICAL FIELDS SEARCHED (IPC) <br><br> H01M <br> B32B |
| Y | JP 2001 345109 A (AISIN TAKAOKA LTD) 14 December 2001 (2001-12-14) * abstract; figure 2 * <br> * paragraphs [0016], [0023], [0025] * | 6,7 | |
| A | WO 2006/028184 A (NEOMAX MATERIALS CO LTD [JP]; KIKUI FUMIAKI [JP]) 16 March 2006 (2006-03-16) * abstract * <br> & EP 1 806 801 A (NEOMAX MATERIALS CO LTD [JP]) 11 July 2007 (2007-07-11) * page 3, paragraph 18 * | 1-11 | |

The present search report has been drawn up for all claims

| Place of search | Date of completion of the search | Examiner |
|---|---|---|
| The Hague | 23 November 2007 | SUAREZ RAMON, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

ANNEX TO THE EUROPEAN SEARCH REPORT
ON EUROPEAN PATENT APPLICATION NO.

EP 07 01 5512

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2007

| Patent document cited in search report | | Publication date | Patent family member(s) | | Publication date |
|---|---|---|---|---|---|
| EP 1557895 | A | 27-07-2005 | CA<br>WO<br>US | 2496339 A1<br>2004019437 A1<br>2006159971 A1 | 04-03-2004<br>04-03-2004<br>20-07-2006 |
| WO 2005081614 | A | 09-09-2005 | DE<br>EP | 102004009869 A1<br>1721351 A2 | 15-09-2005<br>15-11-2006 |
| US 2005003259 | A1 | 06-01-2005 | NONE | | |
| EP 1237215 | A | 04-09-2002 | CA<br>US | 2373344 A1<br>2003068523 A1 | 28-08-2002<br>10-04-2003 |
| JP 2001345109 | A | 14-12-2001 | NONE | | |
| WO 2006028184 | A | 16-03-2006 | CA<br>CN<br>EP<br>KR | 2579634 A1<br>1965431 A<br>1806801 A1<br>20070050396 A | 16-03-2006<br>16-05-2007<br>11-07-2007<br>15-05-2007 |
| EP 1806801 | A | 11-07-2007 | CA<br>CN<br>WO<br>KR | 2579634 A1<br>1965431 A<br>2006028184 A1<br>20070050396 A | 16-03-2006<br>16-05-2007<br>16-03-2006<br>15-05-2007 |

For more details about this annex : see Official Journal of the European Patent Office, No. 12/82

EP 1 887 643 A1

29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002260681 A
- JP 10228914 A
- JP 2006216521 A
- JP 2007142070 A